(19) **Europäisches Patentamt / European Patent Office / Office européen des brevets**

(11) **EP 2 010 938 B1**

(12) **FASCICULE DE BREVET EUROPEEN**

(45) Date de publication et mention
de la délivrance du brevet:
**21.05.2014 Bulletin 2014/21**

(51) Int Cl.:
***G01S 7/52*** *(2006.01)*     ***G01S 15/93*** *(2006.01)*

(21) Numéro de dépôt: **07728552.6**

(86) Numéro de dépôt international:
**PCT/EP2007/054097**

(22) Date de dépôt: **26.04.2007**

(87) Numéro de publication internationale:
**WO 2007/122262 (01.11.2007 Gazette 2007/44)**

(54) **SONDEUR MULTIFAISCEAUX**

MEHRSTRAHL-TONERZEUGUNGSVORRICHTUNG

MULTIBEAM SOUNDER

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **26.04.2006 FR 0603736**

(43) Date de publication de la demande:
**07.01.2009 Bulletin 2009/02**

(73) Titulaire: **Ixwaves Sarl**
**78160 Marly Le Roi (FR)**

(72) Inventeur: **KOPP, Laurent**
**06220 Vallauris (FR)**

(74) Mandataire: **Esselin, Sophie et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A- 1 426 786**      **WO-A-03/081172**
**US-A1- 2005 007 882**

**Description**

La présente invention a pour objet un sondeur multifaisceaux pour effectuer des sondages prédictifs sous-marins, disposé sur une plate-forme marine ou sous-marine.

Les sondeurs multifaisceaux (SMF) actuels comportent habituellement une antenne linéaire ou un réseau 2D d'éléments émissifs produisant une émission ultrasonore perpendiculaire à l'axe de l'antenne, généralement positionnée parallèlement à l'axe d'avancement de la plate-forme. Il en résulte que le sondeur n'a aucune capacité prédictive et ne peut être utilisé qu'à des fins de sondage vertical ou latéral.

On connaît d'après le document US 2005/007882 A1 un sondeur multifaisceaux à contrôle par la fréquence comportant deux antennes d'émission-réception disposées en X en vue d'obtenir un large champ de vue, mais ce document se rapporte à une technique de balayage par lobe de réseau avec une antenne d'émission ambiguë.

La présente invention a pour objet un sondeur multifaisceaux permettant d'anticiper les obstacles et les centres d'intérêt (tels que des obstacles fixes ou des bancs de poissons dans le cas d'un navire de pêche) que va rencontrer la plate-forme sur son parcours, la distance d'anticipation pouvant être avantageusement sensiblement égale à la hauteur d'eau au niveau de la plate-forme, ce sondeur étant le plus économique possible à réaliser, tout en présentant de bonnes performances en résolution

Le sondeur conforme à l'invention est un sondeur multifaisceaux pour effectuer des sondages prédictifs sous-marins, disposé sur une plate-forme marine ou sous-marine, comportant au moins deux antennes d'émission-réception dont les axes respectifs des faisceaux sont dépointés vers l'avant, dans le sens de déplacement de la plate-forme, ces axes étant symétriques par rapport à une droite passant par leur intersection et parallèle à l'axe d'avancement de la plate-forme, et il est caractérisé en ce que la fréquence d'émission de la première antenne, égale à la fréquence de réception de la deuxième, est différente de la fréquence d'émission de la deuxième, cette dernière fréquence étant égale à la fréquence de réception de la première. Selon une caractéristique de l'invention, ces fréquences d'émission et de réception sont le plus proche possible entre elles tout en étant séparables entre elles par filtrage.

La présente invention sera mieux comprise à la lecture de la description détaillée d'un mode de réalisation, pris à titre d'exemple non limitatif et illustré par le dessin annexé, sur lequel :

- la figure 1 est un schéma simplifié illustrant différents paramètres relatifs à une antenne unique d'émission ultrasonore dépointée vers l'avant de sa plate-forme, conformément à une partie de caractéristique de mise en oeuvre de l'invention,

- la figure 2 est un schéma simplifié illustrant différents paramètres relatifs à une antenne unique d'émission ultrasonore désaxée par rapport à l'axe d'avancement de sa plate-forme, conformément à une partie de caractéristique de mise en oeuvre de l'invention, et

- la figure 3 un schéma simplifié illustrant les différents paramètres relatifs à un ensemble de deux antennes d'émission ultrasonore dépointées vers l'avant et désaxées par rapport à l'axe d'avancement de leur plate-forme, conformément à l'invention.

La présente invention sera décrite ci-dessous en référence à un sondeur comportant deux antennes multifaisceaux à géométrie linéaire, mais il est bien entendu que l'invention n'est pas limitée à ce seul exemple, et qu'elle peut être mise en oeuvre avec d'autres types d'antennes, par exemple des antennes en réseau 2D.

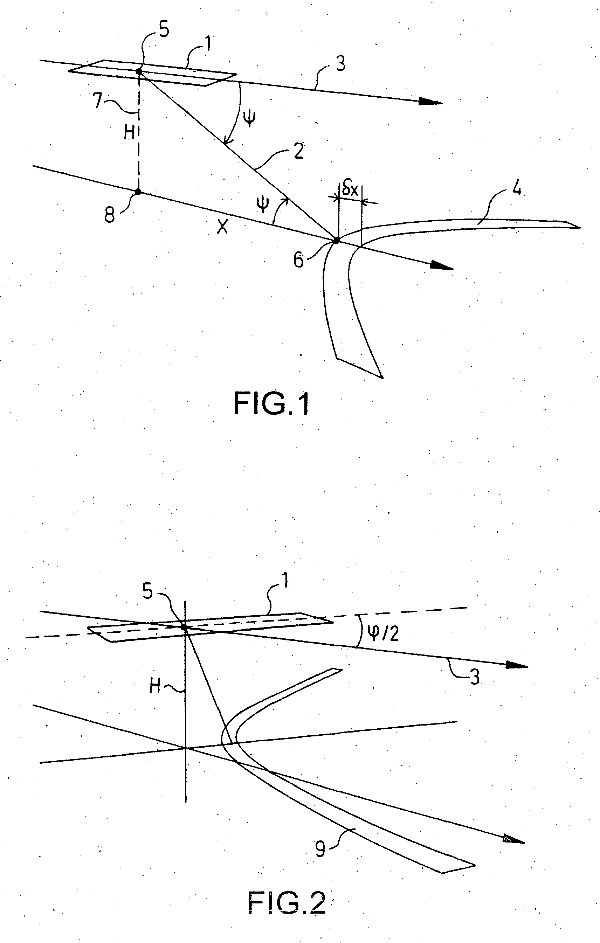

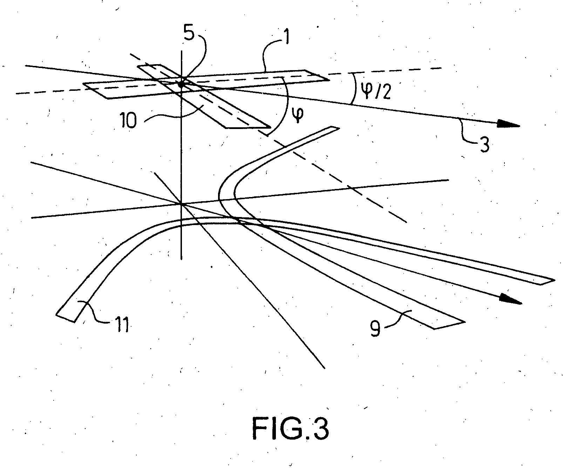

Sur les schémas des figures 1 et 2, on a représenté une seule antenne du dispositif sondeur de l'invention, à savoir l'antenne d'émission, afin de simplifier les explications, en décomposant artificiellement son orientation d'abord selon un dépointage vers l'avant (figure 1), puis en la désaxant par rapport à l'axe d'avancement de la plate-forme (figure 2). En figure 3, on a représenté les deux antennes du sondeur, telles qu'elles doivent être orientées selon l'invention. Sur ces trois figures, les mêmes éléments sont affectés des mêmes références numériques.

Sur le schéma de la figure 1, on a représenté une seule antenne immergée d'émission 1 disposée à une hauteur H au-dessus du fond de l'eau, l'axe de cette antenne étant supposé horizontal. On n'a pas représenté la plate-forme supportant cette antenne. La génératrice 2 du cône d'émission de l'antenne 1 a été représentée dans sa position dans le plan vertical contenant l'axe 3 d'avancement de sa plate-forme porteuse, qui est aussi ici l'axe du cône d'émission de l'antenne 1. L'angle d'ouverture de ce cône d'émission est appelé $\psi$. De préférence cet angle $\psi$ est compris entre 30° et 60° environ. Le cône d'émission de cette antenne 1 intersecte le fond de l'eau selon une figure géométrique 4 (dite « fauchée ») de forme généralement hyperbolique (elle pourrait être de forme parabolique ou elliptique en fonction de la valeur de l'angle $\psi$, c'est-à-dire, par exemple, en fonction du tangage de la plate-forme). La génératrice 2 de ce cône part du centre 5 de l'antenne 1 (qui est aussi le sommet de ce cône) et intersecte le fond de l'eau en un point 6. La verticale 7 abaissée du sommet 5 coupe le fond de l'eau en un point 8. La distance entre les points 6 et 8 est notée x. Dans les faits, la fauchée 4 a une largeur $\delta x$ non nulle dépendant de la longueur L de l'antenne d'émission, de la rasance $\psi$ d'émission, de la hauteur H, et de la longueur d'onde $\lambda$ selon la formule :

$$\delta x = \frac{\lambda}{L} \cdot \frac{H}{\sin^3 \psi}$$

Cette largeur de fauchée impose des limites à la vitesse de déplacement de la plateforme pour assurer un échantillonnage sans trou de la cartographie, mais cette limite est moins contraignante que dans le cas des sondeurs multifaisceaux classiques, par exemple, pour $\psi$=45°, elle est près de 3 fois moins contraignante.
La résolution longitudinale est définie par la formule :

$$\delta X = \frac{c}{2B} \frac{1}{\cos \Psi}$$

Dans un sondeur multifaisceaux classique, la résolution longitudinale et la largeur de la fauchée sont confondues. Ici la résolution sera bien meilleure en général que la largeur de la fauchée, car elle dépend essentiellement de la bande B du signal émis.
L'antenne de réception (non représentée) peut être une antenne linéaire ou un réseau 2D d'antennes élémentaires dont le pointage en site est adapté à la géométrie de la fauchée. En effet, les ondes réfléchies par le fond sur l'antenne de réception présentent un site variable de $\theta 1$ à $\theta 2$ (par rapport au plan horizontal) selon la position du réflecteur dans la fauchée; il faut donc que l'ouverture en site de l'antenne de réception soit suffisante pour éviter d'atténuer les ondes acoustiques réfléchies par les objets de la fauchée insonifiée, ou bien, pour des réseaux 2D, il faut prévoir de pointer l'antenne en site dans cette même plage de valeurs de $\theta 1$ à $\theta 2$. L'angle $\theta 1$ est déterminé par la portée et est typiquement de l'ordre de 20° et l'angle $\theta 2$ est complémentaire de l'angle $\psi$, soit $\theta 2$=90°-$\psi$.

On a représenté sur le schéma de la figure 2 la même antenne d'émission 1 qu'en figure 1, mais désaxée, dans un plan horizontal passant par le centre 5 de l'antenne, d'un angle $\varphi/2$ par rapport à l'axe 3 d'avancement de la plate-forme. La fauchée 9 qu'elle produit est, bien entendu, différente de la fauchée 4, mais a ici une forme sensiblement hyperbolique. L'antenne de réception (non représentée), disposée dans le même plan horizontal que l'antenne 1, forme ainsi avec cette dernière un angle avantageusement égal à environ 90°. Ce désaxage des deux antennes conjointement avec leur dépointage vers l'avant, facilite les corrections des perturbations des informations reçues par l'antenne réceptrice, perturbations dues en particulier à des mouvements en lacets de la plate-forme. Il est connu que les mouvements de plateforme en roulis, tangage et lacets affectent les propriétés de l'insonification de l'antenne d'émission d'un sondeur multifaisceaux classique. Le tangage entraîne un dépointage du faisceau vers l'avant et l'arrière qu'il est possible de corriger par pointage électronique. Le roulis n'a que très peu d'effet sur l'insonification et n'a donc pas besoin d'être corrigé, sauf à la réception. Le lacet a un effet très important et ne peut pas être corrigé de manière simple. Ces remarques restent valables pour une antenne dépointée selon la configuration de la figure 1. Mais, en désalignant l'antenne d'émission par rapport à la route de la plate-forme, on réduit la sensibilité du sondeur aux lacets et on augmente la sensibilité au roulis, c'est-à-dire qu'on équilibre les deux types d'erreurs. En contrepartie, on peut toujours réaliser un pointage électronique qui permet d'assurer la continuité de l'échantillonnage vers l'avant, dans la région qui correspond à la route de la plate-forme. Cette configuration de l'antenne d'émission rend par ailleurs possible l'utilisation d'une antenne de réception ambiguë, afin d'améliorer la résolution latérale. L'orientation de cette antenne de réception sera alors disposée de préférence perpendiculairement à la route de la plate-forme. En effet, on peut alors augmenter l'ouverture de l'antenne de réception en sous-échantillonnant spatialement l'ouverture de manière à ne pas augmenter le nombre de capteurs. Les lobes de réseaux de l'antenne de réception ne sont pas trop gênants car le désalignement de l'antenne d'émission assure, à un instant donné, une insonification dans une seule des directions ambiguës de l'antenne de réception, et ainsi, pour un même nombre de canaux de réception, on peut gérer des antennes de plus grandes dimensions, donc avec une meilleure résolution, ce qui n'est pas réalisable avec des antennes à configuration classique, où l'antenne de réception est perpendiculaire à l'antenne d'émission, et pour lesquelles il existe donc toujours des instants de réception pour lesquels les échos sont présents dans deux directions ambiguës.

On a représenté en figure 3, en plus de la première antenne 1 (orientée comme en figure 2) la deuxième antenne 10, symétrique de l'antenne 1 par rapport à l'axe 3. Comme mentionné ci-dessus, ces deux antennes forment entre elles un angle $\varphi$ de préférence égal à 90°. On notera que si le sondeur comporte plus de deux antennes, l'angle $\varphi$ peut être différent de 90° et les antennes supplémentaires sont avantageusement des antennes de réception qui sont de préférence soit perpendiculaires à la route de la plate-forme, soit perpendiculaires aux deux antennes d'émission. Dans le premier cas, le système comprend, outre les deux antennes d'émission, une seule antenne de réception, éventuellement sous-échantillonnée, tel qu'expliqué ci-dessus. Dans le second cas il y a deux antennes de réception associées aux deux antennes d'émission. La fauchée produite par l'antenne 10 est référencée 11.

Selon une autre caractéristique de l'invention, l'antenne 1 émet à une fréquence f1 et reçoit à une fréquence f2, tandis que l'antenne 10 émet à la fréquence f2 et reçoit à la fréquence f1. La condition à respecter pour ces deux fréquences est qu'elles soient assez proches entre elles pour pouvoir être situées dans la bande passante des deux antennes et qu'elles puissent être séparées spectralement par les dispositifs de réception reliés à ces antennes.

L'intérêt de cette configuration d'antennes est de cumuler les avantages du dépointage, du désaxage et de faire fonctionner les deux antennes à des fréquences d'émission différentes. Ces avantages sont, en particulier :

➢ La résolution longitudinale est bien meilleure que celle d'un SMF simple,

➢ Le dépointage vers l'avant en fait un instrument de navigation propre à assurer la sécurité du bâtiment constituant la plate-forme porteuse,

➢ La rasance faible fournit une insonification similaire à celle d'un sonar latéral et bien adaptée aux relevés topographiques,

➢ Le désaxage permet d'envisager des antennes de réception ambiguë améliorant la résolution latérale,

➢ La double fauchée permet de corriger d'une façon très simple les effets des perturbations d'attitude (roulis, tangage et lacet). En effet, la correction des mouvements de plate-forme est nécessaire pour assurer une couverture « sans trou » des relevés: La configuration habituelle est totalement insensible au roulis ; on a la possibilité de corriger quasi parfaitement les effets du tangage ; par contre elle est très sensible aux mouvements en lacets. La configuration de l'invention est sensible au trois rotations de plate-forme (roulis, tangage, lacets), mais l'erreur résiduelle après correction est moins importante que dans le pire cas de la géométrie classique. Comme l'émission est ambiguë, il n'est pas possible d'en corriger le pointage partout (il n'y a pas équivalence entre pointage électronique et rotation) et il faut donc choisir la position corrigée, et il faut prévoir très souvent plusieurs émissions et plusieurs pointages pour assurer la continuité de la couverture. Ici, le fait de disposer de deux antennes améliore la situation. Le principe de la correction consiste à utiliser des mesures classiques d'attitude (effectuées à l'aide d'une centrale angulaire) pour définir la rotation subie par le système d'antennes et imposer comme direction de pointage de chaque antenne la direction nominale de l'antenne en l'absence de rotation. On est ainsi assuré que, dans la zone avant, l'insonification n'est pas trop perturbée par les rotations parasites (bien entendu, ces effets se feront sentir en dehors de la zone avant, mais avec des conséquences plus faciles à gérer). Il faut d'ailleurs signaler que certains constructeurs utilisent deux antennes (une de chaque bord) pour améliorer la correction, mais dans une configuration à deux antennes d'émission parallèles entre elles et indépendantes. ➢

## Revendications

1. Sondeur multifaisceaux pour effectuer des sondages prédictifs sous-marins, disposé sur une plate-forme marine ou sous-marine, comportant au moins deux antennes d'émission- réception (1, 10) dont les axes respectifs des faisceaux sont dépointés vers l'avant, dans le sens de déplacement de la plate-forme, ces axes étant symétriques par rapport à une droite (3) passant par leur intersection et parallèle à l'axe d'avancement de la plate-forme, **caractérisé en ce que** la fréquence d'émission de la première antenne, égale à la fréquence de réception de la deuxième est différente de la fréquence d'émission de la deuxième, cette dernière fréquence étant égale à la fréquence de réception de la première.

2. Sondeur selon la revendication 1, **caractérisé en ce que** les axes des faisceaux des deux antennes forment entre eux un angle d'environ 90°.

3. Sondeur selon la revendication 1 ou 2, **caractérisé en ce que** les fréquences d'émission et de réception sont le plus proche possible entre elles tout en étant séparables entre elles par filtrage.

4. Sondeur selon l'une des revendications précédentes, **caractérisé en ce que** l'angle d'ouverture ($\psi$) du cône d'émission de chaque antenne émettrice est compris entre 30 et 60° environ.

5. Sondeur selon l'une des revendications précédentes, **caractérisé en ce qu'**il comporte deux antennes d'émission et une antenne de réception ambiguë dont le faisceau est orienté perpendiculairement à la route de la plate-forme.

6. Sondeur selon l'une des revendications 1 à 4, **caractérisé en ce qu'**il comporte deux antennes d'émission et deux antennes de réception dont les faisceaux sont perpendiculaires aux antennes d'émission.

## Patentansprüche

1. Mehrstrahliges Lot zum Durchführen von prädiktiven Unterseelotungen, das auf einer Boot- oder U-Boot-Plattform angeordnet ist, umfassend wenigstens zwei Sende-Empfangsantennen (1, 10), für die die jeweiligen Achsen der Strahlen nach vorne in Bewegungsrichtung der Plattform zeigen, wobei diese Achsen symmetrisch relativ zu einer durch ihren Schnittpunkt verlaufenden Geraden (3) und parallel zur Achse der Vorwärtsbewegung der Plattform sind, **dadurch gekennzeichnet, dass** sich die Sendefrequenz der ersten Antenne, die gleich der Empfangsfrequenz der zweiten Antenne ist, von der Sendefrequenz der zweiten Antenne unterscheidet, wobei diese letztere Frequenz gleich der Empfangsfrequenz der ersten Antenne ist.

2. Lot nach Anspruch 1, **dadurch gekennzeichnet, dass** die Achsen der Strahlen der beiden Antennen miteinander einen Winkel von etwa 90° bilden.

3. Lot nach Anspruch 1 oder 2, **dadurch gekennzeichnet, dass** die Sende- und Empfangsfrequenzen möglichst nahe beieinander liegen, dabei aber durch Filtern voneinander getrennt werden können.

4. Lot nach einem der vorherigen Ansprüche, **dadurch gekennzeichnet, dass** der Öffnungswinkel ($\psi$) des Sendekegels jeder Sendeantenne zwischen etwa 30 und 60° liegt.

5. Lot nach einem der vorherigen Ansprüche, **dadurch gekennzeichnet, dass** sie zwei Sendeantennen und eine uneindeutige Empfangsantenne hat, deren Strahl lotrecht zur Route der Plattform orientiert ist.

6. Lot nach einem der Ansprüche 1 bis 4, **dadurch gekennzeichnet, dass** sie zwei Sendeantennen und zwei Empfangsantennen umfasst, deren Strahlen lotrecht zu den Sendeantennen sind.

**Claims**

1. A multi-beam sounder for carrying out predictive submarine soundings, disposed on a marine or submarine platform, comprising at least two transmission-reception antennae (1, 10), the respective axes of the beams of which are pointed forward in the direction of displacement of said platform, said axes being symmetrical relative to a straight line (3) passing through their intersection and being parallel to the axis of forward motion of said platform, **characterised in that** the transmission frequency of the first antenna, which is equal to the reception frequency of the second antenna, is different to the transmission frequency of the second antenna, said frequency being equal to the reception frequency of the first antenna.

2. The sounder according to claim 1, **characterised in that** the axes of the beams of the two antennae together form an angle of approximately 90°.

3. The sounder according to claim 1 or 2, **characterised in that** the transmission and reception frequencies are as close as possible to each other and at the same time can be separated from each other by filtering.

4. The sounder according to any one of the preceding claims, **characterised in that** the angle of aperture ($\psi$) of the transmission cone of each transmission antenna is between approximately 30 and 60°.

5. The sounder according to any one of the preceding claims, **characterised in that** it comprises two transmission antennae and one ambiguous reception antenna, the beam of which is oriented perpendicular to the route of said platform.

6. The sounder according to any one of claims 1 to 4, **characterised in that** it comprises two transmission antennae and two reception antenna, the beams of which are perpendicular to said transmission antennae.

FIG.1

FIG.2

FIG.3

**EP 2 010 938 B1**

**RÉFÉRENCES CITÉES DANS LA DESCRIPTION**

**Documents brevets cités dans la description**

- US 2005007882 A1